# EUROPEAN PATENT APPLICATION

(11) **EP 1 667 035 A1**
(43) Date of publication of application: **07.06.2006**
(21) Application number: 04028844.1
(22) Date of filing: 06.12.2004
(51) Int. Cl.: G06F 17/30

(54) **Method for transfer of personal data via a webpage using XML**

(71) Applicant: ALCATEL, 75008 Paris (FR)
(72) Inventor: Gass, Raymond, 67150 Bolsenheim (FR)
(74) Representative: Rausch, Gabriele

(57) **Abstract**

A method for transfer of Personal Data via a webpage, the webpage comprising xm1 data, characterized in that the personal data is retrieved as a vCard and that property names and property parameters of the vCard are embedded as XML-code in the webpage

## Description

### Field of the invention

The invention relates to a method for transfer of personal data via a webpage, the webpage comprising XML data.

### Background of the invention

The efficient exchange of personal information found in various electronic media into and out of personal information management (hereinafter referred to as "PIM") applications in computer systems including cellular (mobile) phones, personal digital assistants ("PDA") and portable "laptops" has been a challenge. Personal information including directory information, such as phone numbers, e-mail addresses etc can be found in text form in various electronic media.

The functionality of the exchange by using a computer system or other type of electronic system or device is furthermore dramatically enhanced by coupling stand alone devices (including mobile phones) together to form a networking environment. Within such a networking environment, users may readily exchange files, share information stored on a common database etc. and communicate and establish connections via electronic mail (e-mail), voice over internet, voice over phone, via video teleconferencing etc..

Automatic transfer of directory and calendar information is found in various electronic media such as e-mail, SMS. A widely used format is the so-called vCard format which is structured according to the vCard MIME Directory profile type.

Personal Data Interchange (**PDI**) occurs every time two or more individuals communicate, in either a business or personal context, face-to-face, or across space and time. Such interchanges frequently include the exchange of informal information, such as business cards, telephone numbers, addresses, dates and times of appointments, etc. Augmenting PDI with electronics and telecommunications can help ensure that information is quickly and reliably communicated, stored, organized and easily located when needed.

Personal information, by nature, is complex and diverse. Currently, proprietary standards exist to structure some types of PDI information, but no single, open specification comprehensively addresses the needs of collecting and communicating PDI information across many common communication channels such as telephones, voice-mail, e-mail, and face-to-face meetings.

The hitherto established vCard MIME Directory Profile Type contains directory information, typically pertaining to a single directory entry. The information is described using an attribute schema that is tailored for capturing personal contact information. The vCard can include attributes that describe identification, delivery addressing, telecommunications addressing, geographical, organizational, general explanatory and security and access information about the particular object associated with the vCard.

These types are used in the vCard profile to capture information associated with the identification and naming of the person or resource associated with the vCard.

The Type name "TEL" specifies the telephone number for telephony communication with the object the vCard represents usually with a Type encoding of 8bit. The Type value is a single phone-number value which is according to the IETF standard specified in a canonical form in order to specify an unambiguous representation of the globally unique telephone endpoint. This type is based on the X.500 Telephone Number attribute. Further specifications in canonical form include but are not restricted to the type parameter "TYPE" to specify intended use for the telephone number. The TYPE parameter values can further include parameters like "home" to indicate a telephone number associated with a residence, "msg" to indicate the telephone number has voice messaging support, "work" to indicate a telephone number associated with a place of work, "pref" to indicate a preferred-use telephone number, "voice" to indicate a voice telephone number, "fax" to indicate a facsimile telephone number, "cell" to indicate a cellular telephone number, "video" to indicate a video conferencing telephone number, "pager" to indicate a paging device telephone number, "bbs" to indicate bulletin board system telephone number, "modem" to indicate a MODEM connected telephone number, "car" to indicate a car-phone telephone number, "isdn" to indicate an ISDN service telephone number, "pcs" to indicate a personal communication services telephone number etc. The default type is usually "voice". These type parameter values can be specified as a parameter list (i.e., "TYPE=work;TYPE=voice") or as a value list (i.e., "TYPE=work,voice"). The default can be overridden to another set of values by specifying one or more alternate values.

Within a short time after its standardization the extended markup language XML has become increasingly popular among Software developers in particular for world-wide-web applications. XML is on the way to become a worldwide Standard for the creation of a structured web based document. Extensible Markup Language (XML) is a simple, very flexible text format derived from SGML (ISO 8879). Originally designed to meet the challenges of large-scale electronic publishing, XML is also playing an increasingly important role in the exchange of a wide variety of data on the Web and elsewhere XML can be regarded as a meta language for describing markup languages and provides facilities to define tags and structural relationships between them. XML is a platform independent set of rules for putting structured data into a file. With XML it is fairly easy to separate the content data from the presentation or formatting Information. A webpage in the context of thie invention is data generated at and transferred from a server (Web server) to a client and displayed by a browser (an application usually run on the client) on a display (computer display etc.) of the client.

When retrieving Personal Data Interchange Information on a website, the delivered information can not be further processed by a web browser or related applications.

WO 98/56159 for example discloses a method, where telephone numbers are extracted by a pattern recognition algorithm out of HTML Code. However, using a pattern recognition algorithm has insufficient reliability extracting information for further processing.

### Objects of the invention

It is an object of the present invention to provide a method and a system to overcome the above mentioned disadvantages.

### Summary of the invention

The above mentioned object is accomplished by a method for transfer of personal data via a webpage, the webpage comprising xml data, characterized in that the personal data is retrieved as a vCard and that property names and property parameters of the vCard are embedded as XML-code in the webpage.

Preferably, the webpage contains one XML-Object storing at least parts of the data stored in the vCard. The XML-Object may store the whole contents of the data of the vCard. This means, that the webpage contains an object that represents the former vCard as an XML-Object.

The personal data may be retrieved from a database, especially from a directory service.

In a further preferred embodiment in an additional step a browser displaying the XML Page extracts the personal data out of the XML Code.

The extracted personal data is preferably stored locally as a vCard. In effect the vCard retrieved in the directory service is transmitted via an XML page and stored locally as a vCard.

### Brief description of the drawings

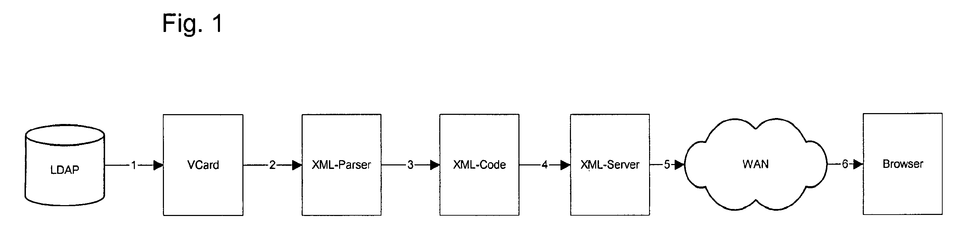

Fig. 1 is a diagram of the method according to the invention.

### Detailed Description of the Invention

### vCard format

vCard is a standard defining the format of an electronic business card. All devices supporting vCard can exchange information such as phone numbers and addresses. For instance a user with a vCard-aware phonebook application on a handheld computer can easily transfer names and phone numbers to a vCard-aware mobile phone.

The format is suitable as an interchange format between applications or systems. The format is defined independent of the particular method used to transport it. The transport for this exchange might be a file system, point-to-point asynchronous communication, wired-network transport, or some form of un-wired transport.

A vCard is a data stream consisting of one or more vCard objects. The individual vCard definitions can be identified and parsed within the DataStream. The vCard data stream may exist as a persistent form in a file system, document management system, network connection between two network endpoints, or in any other digital transport that has an abstraction of a stream of bytes.

Conceptually, a *vCard Writer* creates vCard data streams and a *vCard Reader* interprets vCard data streams. The vCard Reader and Writer may be implemented as a single application or as separate applications. It is not the intent of this specification to define the implementation of these processes beyond some fundamental capabilities related to the format of the vCard data stream and a common set of conformance requirements

This specification provides for a clear-text encoding that is intended to be based on the syntax used by the MIME specification (RFC 1521). The encoding of this specification can be used in environments which are constrained to 7-bit transfer encodings, short line lengths, and low bandwidth. In addition, the encoding is simple in order to facilitate the implementation of reader and writer applications on small platforms, such as Personal Digital Assistants (PDA), cellular telephones, or alphanumeric pagers. The vCard is intended to be used for exchanging information about people and resources. In today's business environment, this information is typically exchanged on business cards. It is appropriate, then that this specification define this information in terms of a paradigm based on an electronic business card object.

The ultimate destination for this information is often a collection of business cards or electronic contact manager. The basis for the data types supported by this specification have their origin in openly defined, international standards and in additional capabilities based on enhancements suggested by the demonstration of the exchange of prototypical vCards using the Internet based World-Wide-Web, Infra-red data transport, and simultaneous voice and data (SVD) modems.

The "person" object defined by the CCITT X.500 Series Recommendation for Directory Services was the primary reference for the properties that are defined by this specification. The X.520/X.521 attributes and objects are mapped into and out of an instance of a vCard. The vCard specification has extended the capabilities that have been defined within the CCITT X.500 Series Recommendation to allow the exchange of additional information often recorded on business cards and electronic contact managers.

The specification of all date and time values are defined in terms of the ISO 8601 standard for representation of dates and times.

The paradigm of an electronic business card is related to the concepts of an entry in a LAN/WAN directory or an electronic mail address book or distribution list. The vCard specification is needed to address the requirements for an interchange format for the "person" personal data type or object.

Personal data applications such as Personal Information Managers (PIM) often provide an import/export capability using Comma Separated Value (CSV) or Tab Delimited Files (TDF) formats. However, these solutions do not preserve the intent of the originating application. When a CSV and TDF format is used by a PIM, the meta-data or semantics of the originating object are only apparent to a similar version of the originating application. Exchange of data between such applications is another important application of an industry-standard specification for an electronic business card interchange format, such as the vCard specification.

The invention is described for illustrative purposes only without restricting the scope of the invention by way of examples and the figure in more detail

As explained before, a vCard is a collection of one or more properties. A property is a uniquely named value. A set of properties can be grouped within a vCard. For example, the properties for a telephone number and comment can be grouped in order to preserve the coupling of the annotation with the telephone number. In addition to property groupings, a vCard can include other, nested vCard objects. This allows for the recording of information about a secondary person or object associated with a given person or object. Additionally, this allows for the specification of a distribution list or work group of multiple vCard objects.

A vCard data stream may include one or more vCard objects. An individual vCard object is identified within a data stream by the appearance of the Begin vCard Delimiter:

### BEGIN:VCARD

The sentinel string must appear as the first characters in the data stream or the first characters on a line. The vCard object is terminated with either the logical end of the data stream or the appearance of the End vCard Delimiter as the first character on a line:

### END:VCARD

*A property* is the definition of an individual attribute describing the vCard. A property takes the following form:
PropertyName [';' PropertyParameters] ':' PropertyValue as shown in the following example:
TEL;HOME:+33-3-77-99-77702

A property takes the form of one or more lines of text. The specification of property names and property parameters is case insensitive. The property name can be one of a set of pre-defined strings. The property name, along with an optional grouping label, must appear as the first characters on a line. In the previous example, "TEL" is the name of the Telephone Number property. Property values are specified as strings. In the previous example, "+33-3-77-99-77702" is the formatted value for the Telephone Number property represented in canonical form.

A property value can be further qualified with a property parameter expression. Property parameter expressions are delimited from the property name with a Semi-colon character (ASCII 59). A Semi-colon in a property parameter value must be escaped with a Backslash character (ASCII 92). The property parameter expressions are specified as either a name=value or a value string. The value string can be specified alone in those cases where the value is unambiguous.

A valid short version of the same property parameter specification might be:
NOTE;QUOTED-PRINTABLE:Don't remember to order a first class menu from Michel Guérard //Full property parameter expression There are two forms of grouping or collections supported within the vCard. A collection of vCard objects can be grouped and a collection of properties within an individual vCard can be grouped. This is also the case within the scope of the present invention, since the telephone numbers, represented in different forms (canonical and non-canonical) are also grouped within one collection of value type numbers or parameters, thus defining the "property grouping" of telephone numbers.

A *Property Grouping* is the definition of a method for specifying a collection of related properties within a vCard object. There is no requirement on a vCard reader that it preserve the property group name. However, the vCard reader is required to preserve the grouping of the properties.
The Property Grouping is identified by a character string prefix to the property name; separated by the Period character (ASCII decimal 46).

The grouping of a comment property with a telephone property is shown in the following example:
A.TEL;HOME:+33-3-77-99-77702
A.NOTE:This is my vacation home.

The vCard Reader conforming to this specification must be able to parse and process the property grouping. The support for Property Grouping is optional for a vCard Writer conforming to this specification.
There may be provided an encoding property at the transport wrapper level. This property can be used in these cases for transporting a vCard data stream that has been defined using a default encoding other than 7-bit (e.g., 8-bit). The usual telephone number property specifies the canonical number string for a telephone number for telephony communication with the vCard object. The value of this property is specified in a canonical form in order to specify an unambiguous representation of the globally unique telephony endpoint. This property is based on the X.520 Telephone Number attribute.

The canonical form cannot be dialed without first being transformed by a dialing algorithm. The dialing algorithm combines the canonical number string with knowledge of the local dialing procedures, in effect at the time of call placement to produce actual dialing instructions. The actual dialing algorithm is outside the scope of this specification.

Software which creates this property can store a string in these allowed formats. Dialing software should be prepared to parse numbers from either of the supported formats; as neither format is considered to be technically costly to support.
This property is identified by the property name TEL. An example of this property follows:
TEL;PREF;WORK;MSG;FAX:+1-800-555-1234
Support for this property is optional for vCard Writers conforming to this specification.

The Telephone Type property parameter specifies the sub-type of telephone that is associated with the telephone number (e.g., Home, Work, Cellular, Facsimile, Video, Modem, Message Service, or Preferred). One or more sub-type values can be specified for a given telephone number.

As an example to better illustrate the present invention without unduly limiting its scope, a person will therefore have the three following business telephone numbers which are indicated on its vCard:
+33 3 90 67 77 02
7 77 02
1234 7702

The first one is the canonical representation used in prior art as explained in the foregoing, which is used in conjunction with the international dialing plan; this is the one that is offered in particular with GSM phones. The second one is a representation in non-canonical form and has to be dialed when the system according to the invention is logged on for example a "private home database" network. The third one also represented in non-canonical form is to be used by the system when for example logged on a "private visitor database" network. The vCard according to the invention thus offers different fields for indicating telephone numbers for persons to be contacted which are represented in canonical and non-canonical form which allow a user desiring to establish a connection with the person to be contacted to optimally selecting the suitable number to be dialed depending on its geographical location at each moment.

Translating from canonical to local numbering will be accomplished on a central basis, for example by a central server to which the mobile systems connects before establishing a connection with the person to be contacted. Therefore the calculation of the right information depending on the localization of the mobile computer system is done on a central computer system which transmits the different results to the terminal or mobile phone, laptop etc, depending on the rules for the description of where to use a number rather than another one, i.e. when to use a non-canonically

All vCards according to the invention can also have graphics and multimedia including photographs, company logos, audio clips such as for name pronunciation, geographic and time zone information in vCards let others know when to contact the user.

The vCard spec is transport and operating system independent so vCard-ready software can be installed on any computer or mobile phone vCards according to the invention are Internet friendly, standards based, and have wide industry support.

vCards according to the invention can be used over infrared links between hand-held organizers, PDAs (Personal Digital Assistants), and notebook PC's from any manufacturer. Within seconds, the participants have the information automatically stored in their favourite directory. Later it can be used to place a phone call, send a fax or Email, or even to initiate a video conference. There is no need to manually enter business card information.

For a call centre, this can very significantly cut down the call time by eliminating the time (and errors) it takes to exchange this information verbally with an operator at a computer keyboard. This provides a great productivity and cost savings in the call centre environment. Voice response units can provide an option to "press 2 to leave your vCard" . Software telephony applications can implement a Send vCard button. This would also provide enhanced functionality for a mobile phone. Other applications include office products, pager applications and smart card technology.

### XML

Extensible Markup Language, abbreviated XML, describes a class of data objects called XML documents and partially describes the behaviour of computer programs which process them. XML is an application profile or restricted form of SGML, the Standard Generalized Markup Language [ISO 8879]. By construction, XML documents are conforming SGML documents.

XML documents are made up of storage units called entities, which contain either parsed or unparsed data. Parsed data is made up of characters, some of which form character data, and some of which form markup. Markup encodes a description of the document's storage layout and logical structure. XML provides a mechanism to impose constraints on the storage layout and logical structure.

A software module called an XML processor is used to read XML documents and provide access to their content and structure. It is assumed that an XML processor is doing its work on behalf of another module, called application.

Each XML document has both a logical and a physical structure. Physically, the document is composed of units called entities. An entity may refer to other entities to cause their inclusion in the document. A document begins in a "root" or document entity. Logically, the document is composed of declarations, elements, comments, character references, and processing instructions, all of which are indicated in the document by explicit markup.

The XML elements including character data and the attributes including the corresponding attribute values form the most important part of the content of a XML-document.

### vCard to XML

In a first step 1 according to Fig. 1, personal data retrieved e.g. from a LDAP database is converted into a vCard. An XML-Parser converts the vCard in step 3 into XML-Code. The XML-Code is delivered in step 4 to a XML (or HTML) server and in step 5 delivered via e.g. internet or a WAN or LAN to a Computer, e.g. a Personal Computer, running a XML-Browser. The Browser displays the contents of the XML Page.

According to the invention, property names and corresponding property values are converted in XML Elements. The property names form the start- and end-tag of the element. The property values are converted into attribute values of the XML Element.

*PropertyName* [*';' PropertyParametersJ ':' PropertyValue* as shown in the example above:
TEL;HOME:+33-3-77-99-77702
are converted in a syntax <Name> Attribute </Name>, e.g. 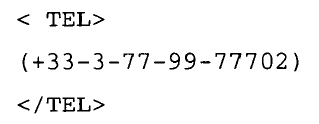 or

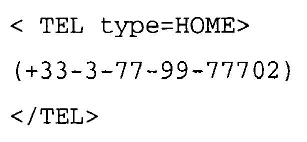

This information is embedded in the XML-Webpage. The vCard may be embedded as an object containing the whole information of the vCard, e.g. like

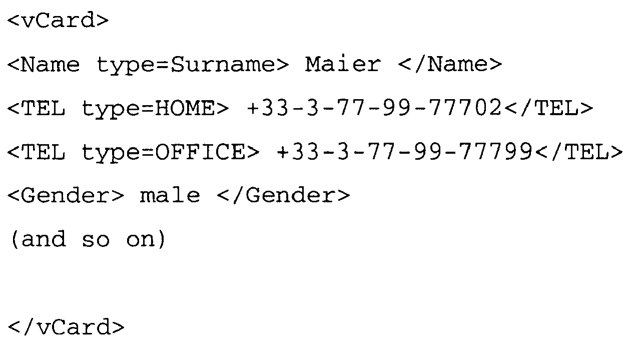

The XML object containing vCard information can then be processed by the Web Browser. The Web Browser may contain an application, e.g. as a JAVA-Applet, which is able to extract a telephone number out of the XML-Code an hand it over to a Computer Telephone Integration (CTI) Application. This means that on a click on the Telephone number the Telephone Number is handed over to a telephony-application that initiates a telephone call e.g. by a PBX to the Telephone Number stored in the XML Page.

### Definitions and Abbreviations

***FPI:*** Formal Public Identifier. A string expression that represents a public identifier for an object. FPI syntax is defined by ISO 9070.
***GUID:*** Globally Unique Identifier
Internet: A WAN connecting thousands of disparate networks in industry, education, government, and research. The Internet uses TCP/IP as the standard for transmitting information.
*MIME:* Multipurpose Internet Mail Extensions, as defined in RFC1521.
PDA: Personal Digital Assistant computing device
***PDI:*** Personal Data Interchange, a collaborative application area which involves the communication of data between people who have a business or personal relationship, but do not necessarily share a common computing infrastructure.
***PIM:*** Personal Information Manager
*RFC#### documents:* Internet "Request For Comment" documents (i.e., RFC822, RFC1521, etc.).
***URL:*** Uniform Resource Locator; a string expression that can represent any resource on the Internet or local system. RFC 1738 defines the syntax for an URL.
*UTC:* Universal Time Coordinated; also known as UCT, for Universal Coordinated Time.
**WAN**: Wide-Area Network
**CTI** computer telephony integration
**PBX** private branch exchange

## Claims

1. A method for transfer of personal data via a webpage, the webpage comprising XML data, **characterized in that** the personal data is retrieved as a vCard and that property names and property parameters of the vCard are embedded as XML-code in the webpage.

2. A method according to claim 1, **characterized in that** the webpage contains one XML-Object storing at least parts of the data stored in the vCard.

3. A method according to claim 2, **characterized in that** the XML-Object stores the whole contents of the data of the vCard.

4. A method according to one of the preceding claims, **characterized in that** the personal data is retrieved from a database.

5. A method according to one of the preceding claims, **characterized in that** the personal data is retrieved from a directory service.

6. A method according to one of the preceding claims, **characterized in that** in an additional step a browser displaying the XML Page extracts the personal data out of the XML Code.

7. A method according to claim 6, **characterized in that** the extracted personal data is locally stored as a vCard.
